# EUROPÄISCHE PATENTSCHRIFT

(11) **EP 3 789 310 B1**
(45) Veröffentlichungstag und Bekanntmachung des Hinweises auf die Patenterteilung: **10.11.2021**
(21) Anmeldenummer: 20203683.6
(22) Anmeldetag: 06.03.2008
(51) Int. Cl.: B65D 33/16, A22C 11/12

(54) **VERSCHLUSSKLAMMER MIT RUNDBODEN**
CLOSURE CLIP WITH ROUND BASE
AGRAFE DE FERMETURE POURVU DE FOND ROND

(30) Priorität: 16.03.2007 DE 102007012776
(43) Veröffentlichungstag der Anmeldung: 10.03.2021
(62) Teilanmeldung aus: 14191524.9
(73) Patentinhaber: Poly-clip System GmbH & Co. KG, 65795 Hattersheim (DE)
(72) Erfinder: SCHLEUCHER, Heiko, 63688 Gedern (DE); HEIN, Klaus, 63688 Gedern (DE); LAPP, Gerhard, 65935 Frankfurt am Main (DE)
(74) Vertreter: Eisenführ Speiser

(56) Entgegenhaltungen:
- EP-A- 0 081 250
- EP-A1- 0 738 662
- EP-A1- 0 869 074
- EP-A1- 1 746 030
- US-A- 4 308 641
- US-A- 5 497 645

## Beschreibung

Die Erfindung betrifft eine Verschlussklammer für sack- oder wurstförmige Produkte gemäß dem Oberbegriff des Anspruchs 1, einen aus diesen Verschlussklammern gebildeten Klammerstrang gemäß dem Anspruch 9 sowie eine Rolle mit einem auf die Rolle aufgewickelten Strang aus mehreren dieser Verschlussklammern gemäß dem Anspruch 10.

Insbesondere betrifft die Erfindung eine Verschlussklammer für sack- oder wurstförmige Produkte, deren Verpackungshüllenmaterial aus wenigstens einer Verpackungsfolie gebildet ist, wobei die Verschlussklammer einen Klammerboden und zwei sich an den Klammerboden in die gleiche Richtung anschließende und von dem Klammerboden voneinander weg divergierende gerade Klammerschenkel aufweist, deren Mittellängsachsen und die Mittellängsachse des Klammerboden in einer gemeinsamen Ebene liegen.

Verschlussklammern bzw. Clip der genannten Art werden beispielsweise zum Schließen von Wurstverpackungen verwendet. Das Verschließen geschieht dabei mit Hilfe spezieller Maschinen, wie Clipmaschinen, welche entsprechenden Füllautomaten für das Zuführen und Abfüllen des zu verpackenden Produkts nachgeordnet sind. Zum Verschließen eines wurstförmigen Produktes wird ein zu einem Zopf geraffter Abschnitt des Verpackungshüllenmaterials in die Verschlussklammer eingeführt, die ihrerseits in einer der Form des Klammerbodens entsprechend geformten Matrize gehalten ist. Daraufhin werden die Schenkel der Klammer mit Hilfe eines gegen die Matrize bewegten Stempels um den Verpackungszopf herum verschlossen.

Aus dem deutschen Gebrauchsmuster 90 009 36 geht eine Verschlussklammer der eingangs genannten Art hervor, die einen Klammerboden und zwei sich an den Klammerboden in die gleiche Richtung anschließende und von dem Klammerboden voneinander wegdivergierende gerade Klammerschenkel aufweist, wobei die Mittellängsachsen der Klammerschenkel und die des Klammerbodens in einer gemeinsamen Ebene liegen. Der Klammerboden verläuft dabei gerade, sodass in der Draufsicht diese vorbekannte Verschlussklammer die Form des Buchstabens "U" mit vom Klammerboden aus auseinanderlaufenden Seitenschenkeln aufweist. Zwar sind bei dieser bekannten Verschlussklammer die Ecken, in denen der gerade Klammerboden in die geraden Klammerschenkel übergeht, abgerundet, jedoch besitzen diese Rundungen nur einen kleinen Rundungsradius. Hierdurch kann es beim Verschließen der Verschlussklammer in einer Clipmaschine mittels beispielsweise einer Matrize und einem Stempel an diesen Ecken zu einem Einknicken kommen, wodurch ein Riss innerhalb der Verschlussklammer entsteht. Dieser Riss schwächt die Verschlussklammer, sodass sie bei einer nur geringen weiteren Belastung bricht und damit ihre Verschlussfunktion verliert.

Aus der EP 0 738 662 A1 ist eine U-förmige Verschlussklammer mit einem gerade verlaufenden Boden und zwei sich von diesem Boden aus in die gleiche Richtung erstreckende, gerade Klammerschenkel entnehmbar. Über die gesamte Innenseite der Klammerschenkel des Klammerbodens erstrecken sich drei V-förmige, parallel zueinander angeordnete Nuten.

Weiterhin ist aus der EP 0 081 250 A1 eine U-förmige Verschlussklammer aus bandförmigem Material bekannt. Diese Verschlussklammer weist einen Klammerboden und zwei Schenkel auf, an deren freien Enden Verbindungsstege vorgesehen sind, an denen die Verschlussklammern zu einem Klammerstreifen miteinander verbunden sind. Über den Klammerboden erstreckt sich eine nach innen gerichtete Versteifungssicke zur Erhöhung der Festigkeit der Verschlussklammer gegen Aufbiegen.

Es ist Aufgabe der vorliegenden Erfindung, eine Verschlussklammer der eingangs genannten Art bereitzustellen, bei der trotz einer hohen Schließkraft und einer damit einhergehenden starken Verformung der Klammer eine Rissbildung in der Klammer zuverlässig vermieden wird, und ein sicherer Verschluss gewährleistet werden kann.

Hinsichtlich der Verschlussklammer wird die vorstehende Aufgabe durch die Merkmale des Anspruchs 1 gelöst. In den sich daran anschließenden Ansprüchen finden sich vorteilhafte Ausgestaltungen hierzu.

Insbesondere wird eine Verschlussklammer für sack- oder wurstförmige Produkte, deren Verpackungshüllenmaterial aus wenigstens einer Verpackungsfolie bzw. einem Verpackungsvlies oder einem Verpackungsfasermaterial gebildet ist, vorgeschlagen, wobei die Verschlussklammer einen Klammerboden mit einer teilkreisförmigen Rundung und zwei sich an den Klammerboden in die gleiche Richtung anschließende und von dem Klammerboden voneinander wegdivergierende gerade Klammerschenkel aufweist, deren Mittellängsachsen und die Mittellängsachse des Klammerbodens in einer gemeinsamen Ebene liegen, und wobei an den freien Enden der Klammerschenkel von der Symmetrieachse der Verschlussklammer wegweisende Verbindungsfortsätze vorgesehen sind, an denen die Verschlussklammern kettenartig miteinander verbunden werden können.

Weiterhin sind erfindungsgemäß an den zueinander weisenden Flächen des Klammerbodens und der beiden Klammerschenkel zwei sich längserstreckende parallele Profilausnehmungen vorgesehen, die sich über die gesamten zueinander weisenden Flächen des Klammerbodens und der beiden Klammerschenkel erstrecken und beidseits entlang der Mittellängsachse der zueinander weisenden Flächen des Klammerbodens und der beiden Klammerschenkel verlaufen, wobei die Profilausnehmungen jeweils durch eine V-förmige Kerbe gebildet sind.

Die runde Form des Klammerbodens vermeidet Eckübergänge zwischen Klammerboden und Klammerschenkel, so dass beim Verschließen eine Rissbildung sicher vermieden wird. Darüber hinaus schont die erfindungsgemäße Verschlussklammer das Verpackungshüllenmaterial, da sich die Verschlussklammer optimal um den zu einem Zopf zusammengerafften Abschnitt des Verpackungshüllenmaterials formen kann. Hierdurch wird auch die Schließ- bzw. Zuhaltekraft deutlich erhöht. Darüber hinaus erleichtert die runde Form der Verschlussklammer die Anpassung der Klammergrößen an dünner werdende Verpackungshüllen. Die an den freien Enden der Klammerschenkel vorgesehenen Verbindungsfortsätze ermöglichen das Bilden eines Klammerstrangs aus aneinandergefügten Verschlussklammern. Die Profilausnehmungen bewirken einen höheren Widerstand gegen ein Abziehen der Verschlussklammer in axialer Richtung, und ermöglichen somit einen sicheren Verschluss.

Sind die Übergänge von dem Klammerboden zu den beiden Klammerschenkeln stetig bzw. gleichförmig ausgebildet, wird die Vermeidung eines Risses weiter unterstützt.

Das bereits vorstehend erwähnte schonende Umschließen des Verpackungshüllenmaterials im Bereich des hieraus gebildeten Zopfs wird weiterhin noch dadurch unterstützt, dass der Übergang von dem Klammerboden zu den beiden sich daran anschließenden Klammerschenkeln stetig bzw. gleichförmig erfolgt.

Grundsätzlich kann die erfindungsgemäße Verschlussklammer jeden gewünschten Querschnitt annehmen. Eine besonders vorteilhafte Ausgestaltung der Verschlussklammer ist gekennzeichnet durch einen Querschnitt, der im Wesentlichen die Form eines Ovals bzw. einer Ellipse besitzt. Dabei kann das Oval langgestreckt ausgestaltet sein, wobei vorzugsweise die Länge der Hauptachse des Ovals ein Vielfaches des Radius an den Scheitelpunkten der Ellipse beträgt.

Um eine Kodierung der Verschlussklammer durch Einprägen entsprechender Informationen auf der Klammer ermöglichen zu können, ist es weiterhin von Vorteil, dass das Oval gerade bzw. ebene Längsseiten aufweist, die zumindest annährend parallel zu der Hauptachse des Ovals verlaufen. Hierdurch kann die vorgenommene Prägung eine entsprechende Größe aufweisen, so dass sie mit dem menschlichen Auge erfasst werden kann. Zum Aufbringen der Prägung auf den teilkreisbogenförmigen Klammerboden kann ein entsprechend geformter Stempel vorgesehen werden.

Um eine gleichmäßige Verformung der Verschlussklammer in allen Bereichen erzielen zu können, ist es weiterhin vorteilhaft, wenn die Verschlussklammer eine im Wesentlichen über ihre gesamte Länge zumindest annähernd gleichbleibende Materialdicke besitzt.

Die erfindungsgemäße Verschlussklammer kann aus den unterschiedlichsten Materialien und den verschiedensten Halbzeugen hergestellt werden. Eine besonders einfache Herstellung lässt sich dadurch erzielen, dass die Verschlussklammer aus einem Draht, vorzugsweise aus Aluminium, gefertigt ist.

Dabei ist es von Vorteil, wenn die Verbindungsfortsätze zur Bildung eines Klammerstrangs in einem Winkel von zumindest annähernd 90° vorzugsweise zu der Symmetrieachse der Verschlussklammer nach außen abgewinkelt sind. Des Weiteren können die vom Scheitelpunkt der teilkreisbogenförmigen Rundung des Klammerbodens wegweisenden Flächen der Verbindungsfortsätze zumindest teilweise in der gleichen, vorzugsweise die Symmetrieachse der Verschlussklammer senkrecht schneidenden Ebene liegen. Ebenso ist es aber auch möglich, dass diese Flächen in zwei sich schneidenden und mit der Symmetrieachse der Verschlussklammer einen spitzen Winkel einschließenden Ebenen angeordnet sind.

Bei der Verarbeitung von Verschlussklammern ist neben der vorstehend genannten Gefahr, dass nach der Verformung der Verschlussklammer sich an dieser Risse zeigen, auch von Bedeutung, dass das Abtrennen der einzelnen Verschlussklammer von einem aus den Verschlussklammern gebildeten Klammerstrang mit möglichst geringen Kräften geschehen kann und dass die dabei entstehende Geräuschemission gering ist. Um dieses Ziel zu erreichen, kann die erfindungsgemäße Verschlussklammer weiterhin im Bereich der voneinander wegweisenden stirnseitigen Enden der Verbindungsfortsätze Einschnürungen aufweisen, die sich in Richtung der stirnseitigen Enden der Verbindungsfortsätze verjüngen. Diese Einschnürung bzw. Verjüngung des Verbindungsfortsatzes in Richtung seines freien Endes reduziert den Gleitwiderstand des Stempelwerkzeuges, wenn der Stempel auf die Verschlussklammer trifft, da die um einen kleinen Radius abgewinkelten Verbindungsfortsätze das Eintauchen des gewölbten Stempels erleichtern. Weiterhin erzeugen die Verbindungsfortsätze bei einer verschlossenen Klammer oben und innen eine leichte Herzform, in dem sich die Verbindungsfortsätze durch den Stempel nach innen biegen. Dies erhöht die Festigkeit der Verschlussklammer.

Grundsätzlich können die sich in Richtung des freien Endes der Verbindungsfortsätze vorgesehenen Verjüngungen durch unterschiedliche geometrische Ausgestaltungen erzielt werden. So ist es beispielsweise denkbar, die Verjüngung durch eine in Draufsicht eine Keilform aufweisende Ausgestaltung zu bewirken oder aber durch zwei zueinander weisende konkave Rundungen. Selbstverständlich ist auch jede andere Ausgestaltung möglich.

Um das sack- oder wurstförmige Produkt sicher zu verschließen, wird, wie dies bereits eingangs erwähnt worden ist, die Verschlussklammer um einen zu einem Zopf gerafften Abschnitt des Verpackungshüllenmaterials plastisch verformt. Je nach Höhe der Zuhaltekraft bestimmt sich auch der Widerstand der Verschlussklammer gegen ein in axialer Richtung erfolgendes Abziehen der Klammer von dem sack- bzw. wurstförmigen Produkt. Um hier einen zusätzlichen Widerstand zu erhalten, ist, wie oben bereits ausgeführt, vorgesehen, dass an den zueinander weisenden Flächen des Klammerbodens und der beiden Klammerschenkel zwei sich längserstreckende parallele Profilausnehmungen vorgesehen sind, die sich über die gesamten zueinander weisenden Flächen des Klammerbodens und der beiden Klammerschenkel erstrecken und beidseits entlang der Mittellängsachse der zueinander weisenden Flächen des Klammerbodens und der beiden Klammerschenkel verlaufen

Die Profilausnehmungen sind jeweils durch eine V-förmige Kerbe gebildet.

Ein durch die erfindungsgemäßen Verschlussklammern gebildeter Klammerstrang aus aneinander hängenden Verschlussklammern, wie sie vorstehend im Zusammenhang mit der Erfindung erläutert worden sind, ist dadurch gebildet, dass die Verschlussklammern an den Verbindungsfortsätzen, die an den freien Enden der Klammerschenkel vorgesehen sind, kettenartig, vorzugsweise einstückig miteinander verbunden sind.

Um die Verarbeitung der zu einem Strang zusammengefügten Verschlussklammern zu erleichtern, ist weiterhin vorgesehen, dass diese auf eine Rolle aufgewickelt sind.

Wie bereits vorstehend erwähnt, können unterschiedliche Größen für die Verschlussklammern vorgesehen werden, um unterschiedlichen Anforderungen hinsichtlich Zuhaltekraft, Umschließungsdurchmesser usw. genüge leisten zu können. Mit jeder Verschlussklammer- bzw. Clipgröße ist es notwendig, ein entsprechendes Werkzeug, insbesondere eine entsprechende Matrize bereitzustellen. In der Vergangenheit hat dies häufig zu Problemen dahingehend geführt, dass eine falsche Matrize zur Verarbeitung einer bestimmten Klammergröße eingesetzt worden ist.

Wie ebenfalls bereits vorstehend erwähnt worden ist, können die Verschlussklammern mit einer entsprechenden Prägung versehen sein, die jedoch von einer Bedienperson falsch interpretiert oder falsch verstanden werden kann. Deshalb ist es vorteilhaft, wenn auf der Rolle wenigstens eine maschinenlesbare Kennung vorgesehen ist. In einem solchen Fall ist es möglich, dass die die Verschlussklammern verarbeitende Maschine die notwendigen Informationen von dieser maschinenlesbaren Kennung entnehmen kann und im Falle einer falsch zugeordneten Matrize ein entsprechendes Störsignal ausgibt und den Betrieb einstellt.

Weiterhin wird eine Matrize zum Verarbeiten von Verschlussklammern gemäß der Erfindung vorgeschlagen, wobei der die Verschlussklammer zumindest teilweise haltende Matrizenboden eine zur teilkreisbogenförmigen Rundung des Verschlussklammerbodens korrespondierende Rundung aufweist. Durch die Rundung des Matrizenbodens wächst die Matrize mit der jeweiligen Klammergröße mit, d.h., bei jeder Verschlussklammer wird eine Matrize zugeordnet, sodass das sogenannte Überlaufen des Klammermaterials ausgeschlossen werden kann.

Zu erwähnen ist noch, dass die erfindungsgemäße Verschlussklammer einen linearen Verfahrweg für das oder die Schließwerkzeuge ermöglicht. Insbesondere kann der Stempel in gerader Linie vorzugsweise senkrecht von oben auf die waagerecht in der Matrize liegende, offene Verschlussklammer verfahren. Beim Auftreffen des Stempels auf die Verschlussklammer ruht diese in einer festen Position in der erfindungsgemäßen Matrize. Hierdurch kann im Gegensatz zum Stand der Technik ein seitliches Verdrehen der Verschlussklammer vermieden werden, wodurch der Ausschuss an hergestellten Produkten verringert werden kann. Darüber hinaus reduziert sich hierdurch auch die Beanspruchung der die Verschlussklammern verarbeitende Maschine und damit deren Verschleißkosten.

Weitere vorteilhafte Ausgestaltungen sowie ein Ausführungsbeispiel der erfindungsgemäßen Verschlussklammer sowie ein Beispiel einer Matrize werden nachstehend im Zusammenhang mit den beigefügten Zeichnungsfiguren erläutert. Die in Verbindung mit der Beschreibung verwendeten Begriffe "links", "rechts", "oben" und "unten" beziehen sich auf die Zeichnungsfiguren in einer Ausrichtung mit normal lesbaren Figurenbezeichnungen und Bezugszeichen. Hierbei ist:
- Fig. 1A - 1D: verschiedene Ansichten bzw. Schnittansichten einer nicht erfindungsgemäßen Verschlussklammer;
- Fig. 2A - 2D: verschiedene Ansichten bzw. Schnittansichten eines Ausführungsbeispiels einer erfindungsgemäßen Verschlussklammer; und
- Fig. 3A, 3B: eine Seitenansicht sowie eine perspektivische Ansicht einer Matrize.

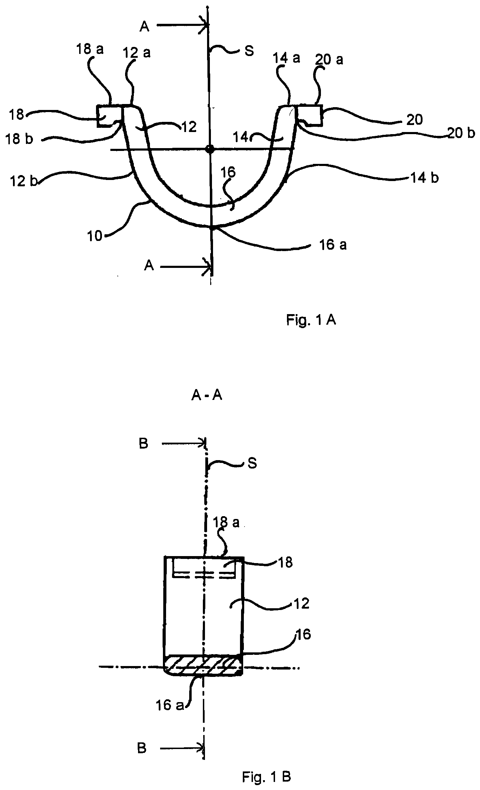

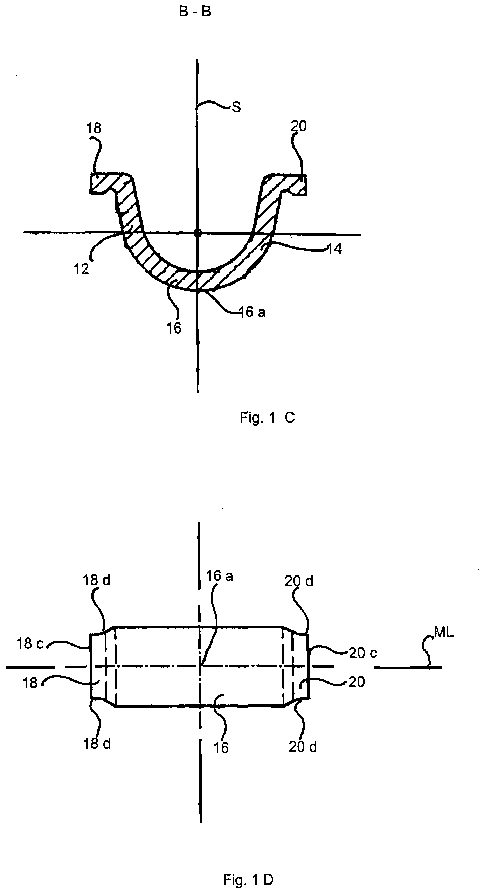

Das in den Fig. 1A bis 1D gezeigte Beispiel einer nicht erfindungsgemäßen Verschlussklammer 10 ist aus einem Aluminiumdraht oder Aluminiumblechstreifen hergestellt (selbstverständlich kann aber auch jedes andere geeignete Material für die Herstellung der Verschlussklammer 10 eingesetzt werden). Wie insbesondere aus den Fig. 1A und 1C ersichtlich ist, besitzt die Verschlussklammer 10 die Form des Buchstabens "V", wobei aber die beiden zumindest annährend gleich langen Klammerschenkel 12, 14 der Verschlussklammer 10 nicht in einem spitzen Winkel aufeinandertreffen, sondern durch eine teilkreisbogenförmige Rundung miteinander verbunden sind. Diese teilkreisbogenförmige Rundung bildet den Klammerboden 16 der Verschlussklammer 10. Wie ebenfalls aus den Fig. 1A und 1C ersichtlich ist, sind die Übergänge von dem Klammerboden 16 zu den beiden Klammerschenkeln 12, 14 gleichförmig und stetig, d.h. ohne einen Knick und dgl. Von der teilkreisbogenförmigen Rundung des Klammerbodens 16 aus erstrecken sich die beiden Klammerschenkel 12, 14 nach oben und divergieren dabei voneinander.

Der Aufbau der Verschlussklammer 10 in der Ebene der Fig. 1A ist achsensymmetrisch zu der in der Fig. 1A vertikal laufenden und in der Ebene der Zeichnungsfiguren 1A liegenden Symmetrieachse S, die durch den Scheitelpunkt 16a der teilkreisbogenförmige Rundung des Klammerbodens 16 verläuft, wie dies aus Fig. 1A entnehmbar ist. Ebenso ist die Verschlussklammer 10 in der Ebene der Fig. 1B achsensymmetrisch zu der Symmetrieachse S. Weiterhin liegen die Mittelachsen ML der beiden Klammerschenkel 12, 14 sowie die Symmetrieachse S und die von dem Klammerboden 16 definierte Teilkreisfläche in einer gemeinsamen Ebene.

Wie aus Fig. 1B ersichtlich ist, besitzt die Verschlussklammer 10 einen abgeflacht ovalen bzw. elliptischen Querschnitt, wobei die beiden Längsseiten des Ovals zumindest annährend parallel zu der Hauptachse der das Oval bildenden Ellipse verlaufen. Wie weiterhin aus Fig. 1B entnommen werden kann, ist die Länge der Nebenachse der Ellipse ein mehrfaches kleiner als die Hauptachse. Des Weiteren ist der an den Scheitelpunkten der Ellipse vorgesehene Radius für den Scheitelteilkreisbogen der Ellipse ebenfalls ein mehrfaches kleiner als die Länge der Hauptachse. Schließlich erstrecken sich die beiden Scheitelteilkreisbogen der Ellipse über eine Winkel von 180°.

An ihren freien Enden 12a, 14a sind die Klammerschenkel 12, 14 mit je einer Abkröpfung 18, 20 versehen. Die Abkröpfungen 18, 20 weisen zumindest annährend in einem Winkel von 90° zu der Symmetrieachse S in entgegengesetzte Richtungen nach außen und sind zumindest annährend gleichlang. Die beiden von dem Scheitelpunkt 16a des Klammerbodens 16 wegweisenden Flächen 18a, 20a der Abkröpfungen 18, 20 liegen in einer gemeinsamen Ebene, die die Symmetrieachse S in einem Winkel von 90° schneidet. Um die Abkröpfung 18, 20 leicht aus einem Abschnitt der Klammerschenkel 12, 14 herstellen zu können, sind Hinterschneidungen 18b, 20b an den Außenflächen 12b, 14b der Klammerschenkel 12, 14 vorgesehen.

Die Abkröpfungen dienen als Verbindungsfortsätze 18, 20, an denen sich zur Bildung eines nicht weiter dargestellten Strangs aus Verschlussklammern 10 jeweils eine weitere Verschlussklammer 10 mit ihrem zugehörigen Verbindungsfortsatz 20 bzw. 18 anschließen kann. Die Verbindung von aufeinanderfolgenden Verschlussklammern 10 des Strangs ist einstückig, wobei die Trennung der aufeinanderfolgenden Verschlussklammern 10 an ihren gemeinsamen Verbindungsfortsätzen 18, 20 bzw. 20, 18 jeweils mittig erfolgt. Selbstverständlich kann einer der beiden Verbindungsfortsätze 18, 20 der dargestellten Verschlussklammer 10 auch den Anfang des Klammerstrangs bilden.

Zur Verringerung der zur Trennung aufeinanderfolgender Verschlussklammern 10 eines Klammerstrangs notwendigen Schneid- bzw. Trennkraft sowie zur Verringerung der dabei entstehenden Geräuschemission sind im Bereich der freien Enden 18c, 20c der Verbindungsfortsätze 18, 20 Einschnürungen 18d, 20d vorgesehen (vgl. Fig. 1D). Wie insbesondere aus Fig. 1D ersehen werden kann, sind die beiden Einschnürungen 18d, 20d durch zwei zueinander weisende konkave Rundungen gebildet, die sich senkrecht zu den beiden von dem Scheitelpunkt 12a wegweisenden Flächen 18a, 20a der Verbindungsfortsätze 18, 20 erstrecken. Hierdurch verjüngen sich die Verbindungsfortsätze 18, 20 in Richtung ihrer freien Enden 18c, 20c symmetrisch und gleichmäßig in der Weise, dass bei aufeinanderfolgenden Verschlussklammern 10 eines Klammerstranges im Bereich der beiden einstückig miteinander verbunden Verbindungsfortsätze 18 bzw. 20 der Klammern 10 eine halbkreisförmige Ausnehmung vorgesehen ist, in deren Bereich der Trennschnitt erfolgt. Vorzugsweise verläuft der Trennschnitt entlang der die beiden Scheitelpunkte der gemeinsamen halbkreisförmigen Einschnürungen miteinander verbindenden Geraden der beiden aufeinanderfolgenden Verschlussklammern 10.

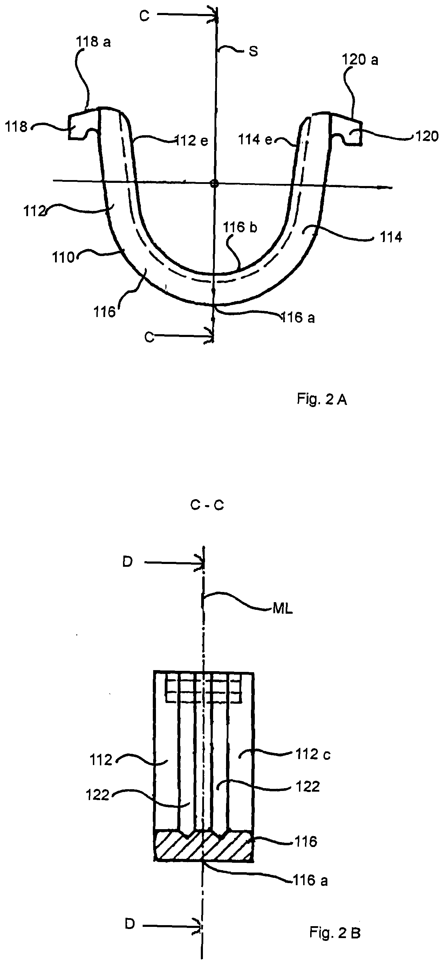

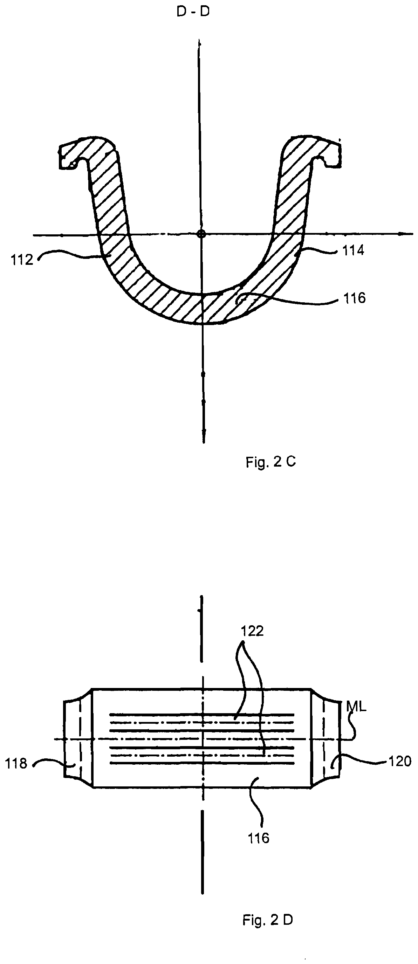

Es ist noch zu bemerken, dass alle Kanten der Verschlussklammer 10 abgerundet sind, um u.a. eine Beschädigung des Verpackungshüllenmaterials zu vermeiden. In den Fig. 2A bis 2D ist ein Ausführungsbeispiel einer erfindungsgemäßen Verschlussklammer 110 wiedergegeben. Diese Verschlussklammer 110 weist einen geometrisch ähnlichen, in ihren Abmessungen aber größeren Aufbau zu der im Zusammenhang mit den Fig. 1A bis 1D erläuterten Verschlussklammer 10 auf, so dass nachstehend lediglich auf die Unterschiede eingegangen wird. Dabei werden funktionsgleiche bzw. geometrisch ähnliche Abschnitte der Verschlussklammer 110 mit den gleichen Bezugszeichen, wie sie für die Verschlussklammer 10 im Zusammenhang mit den Fig. 1A bis 1D verwendet wurden, erhöht um 100 bezeichnet. Wie aus den Fig. 2A und 2C ersichtlich ist, liegen die von dem Scheitelpunkt 112a wegweisenden Flächen 118a, 120a der die Verbindungsfortsätze 118, 120 bildenden Abkröpfungen der Klammerschenkel 112, 114 nicht in der selben Ebene. Vielmehr schließen diese Flächen 118a, 120a einen spitzen Winkel miteinander ein, so dass sie schräg nach unten verlaufen und ihr gemeinsamer Winkelscheitelpunkt auf der Symmetrieachse S gegenüberliegend zu dem Scheitelpunkt 116a des Klammerbodens 116 liegt.

Weiterhin sind an den Innenflächen 112e, 114e, 116b der Klammerschenkel 112, 114 und des Klammerbodens 116 zwei beidseits der Mittellängslinie ML dieser Flächen 112e, 114e, 116b angeordnete V-förmige Profilausnehmungen 122 vorgesehen. Es ist anzumerken, dass in der Projektion der Fig. 2B die Mittellängsachse ML der Innenflächen 112e und 116b mit der Symmetrieachse S zusammenfällt. Der Abstand der parallel zueinander verlaufenden und sich über die gesamte Länge dieser Flächen 112e, 114e, 116b verlaufenden Profilausnehmungen 122 zueinander und zu der Mittellängslinien ML ist kleiner als zu den nicht näher bezeichneten Seitenrändern der Klammerschenkel 112, 114 und des Klammerbodens 116. Diese Profilausnehmungen 122 dienen u.a. dazu, ein Verhaken der um einen gerafften Zopfabschnitt des Verpackungshüllenmaterials verschlossenen Klammer 110 und des Verpackungshüllenmaterials zu erreichen.

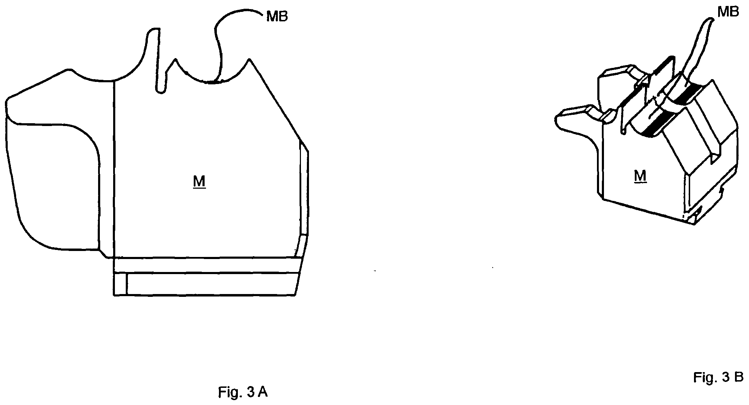

In den Fig. 3A und 3B ist eine Matrize M in einer Perspektiv und Seitenansicht wiedergegeben. Diese Matrize M weist einen üblichen Aufbau mit dem Unterschied auf, dass der Matrizenboden MB eine zu der teilkreisförmigen Rundung des Klammerbodens 16, 116 korrespondierende Rundung besitzt. Im Bereich des Scheitelpunktes der teilkreisförmigen Rundung des Matrizenbodens MB sind quer verlaufende Rillen vorgesehen, um die Fixierung der Verschlussklammer 10, 110 nach deren Abtrennung von dem Klammerstrang zu erhöhen.

## Patentansprüche

1. Verschlussklammer für sack- oder wurstförmige Produkte, deren Verpackungshüllenmaterial aus wenigstens einer Verpackungsfolie gebildet ist, wobei die Verschlussklammer (110) einen Klammerboden (116) mit einer teilkreisbogenförmigen Rundung und zwei sich an den Klammerboden (116) in die gleiche Richtung anschließende und von dem Klammerboden (116) voneinander weg divergierende gerade Klammerschenkel (112, 114) aufweist, deren Mittellängsachsen und die Mittellängsachse (ML) des Klammerbodens (116) in einer gemeinsamen Ebene liegen, wobei eine Symmetrieachse (S) der Verschlussklammer (110) durch den Scheitelpunkt (116a) der teilkreisbogenförmigen Rundung des Klammerbodens (116) verläuft und die Mittelachsen (ML) der beiden Klammerschenkel (112, 114) sowie die Symmetrieachse (S) und die von dem Klammerboden (116) definierte Teilkreisfläche in einer gemeinsamen Ebene liegen, und wobei an den freien Enden der Klammerschenkel (112, 114) von der Symmetrieachse (S) der Verschlussklammer (110) wegweisende Verbindungsfortsätze (118, 120) vorgesehen sind, an denen mehrere Verschlussklammern (110) kettenartig miteinander verbunden werden können,
**dadurch gekennzeichnet, dass** an den zueinander weisenden Flächen (112e, 114e, 116b) des Klammerbodens (116) und der beiden Klammerschenkel (112, 114) zwei sich längserstreckende parallele Profilausnehmungen (122) vorgesehen sind, die sich über die gesamten zueinander weisenden Flächen (112e, 114e, 116b) des Klammerbodens (116) und der beiden Klammerschenkel (112, 114) erstrecken und beidseits entlang der Mittellängsachse (ML) der zueinander weisenden Flächen (112e, 114e, 116b) des Klammerbodens (116) und der beiden Klammerschenkel (112, 114) verlaufen, und die jeweils durch eine V-förmige Kerbe gebildet sind.

2. Verschlussklammer nach Anspruch 1,
**dadurch gekennzeichnet, dass** der Übergang zwischen dem Klammerboden (116) und den beiden Klammerschenkeln (112, 114) gleichförmig ausgebildet ist.

3. Verschlussklammer nach einem der Ansprüche 1 oder 2,
**gekennzeichnet durch** eine im Wesentlichen über ihre gesamte Länge zumindest annährend gleichbleibende Materialdicke.

4. Verschlussklammer nach einem der Ansprüche 1 bis 3,
**dadurch gekennzeichnet, dass** sie aus einem Draht hergestellt ist.

5. Verschlussklammer nach Anspruch 1,
**dadurch gekennzeichnet, dass** die Verbindungsfortsätze (118, 120) in einem Winkel von zumindest annährend 90°, bezogen auf die Symmetrieachse (S), nach außen abgewinkelt sind.

6. Verschlussklammer nach Anspruch 1,
**dadurch gekennzeichnet, dass** die Verbindungsfortsätze (118, 120) von der teilkreisbogenförmigen Rundung des Klammerbodens (116) wegweisende Flächen (118a, 120a) aufweisen, die in zwei sich schneidenden und mit der Symmetrieachse (S) einen spitzen Winkel einschließenden Ebenen angeordnet sind.

7. Verschlussklammer nach Anspruch 1,
**dadurch gekennzeichnet, dass** vom Scheitelpunkt (116a) der teilkreisbogenförmigen Rundung des Klammerbodens (116) wegweisende Flächen (118a, 120a) der Verbindungsfortsätze (118, 120) zumindest teilweise in der gleichen, vorzugsweise die Symmetrieachse (S) der Verschlussklammer (110) senkrecht schneidenden Ebene liegen.

8. Verschlussklammer nach Anspruch 1,
**dadurch gekennzeichnet, dass** im Bereich voneinander wegweisender stirnseitiger Enden der Verbindungsfortsätze Einschnürungen vorgesehen sind, die sich in Richtung der stirnseitigen Enden der Verbindungsfortsätze verjüngen.

9. Klammerstrang aus Verschlussklammern (110) nach einem der Ansprüche 1 bis 8, wobei die Verschlussklammern (110) über ihre Verbindungsfortsätze (118, 120), die an den freien Enden der Klammerschenkel (112, 114) vorgesehen sind, kettenartige miteinander verbunden sind.

10. Rolle mit einem auf die Rolle aufgewickelten Strang aus mehreren Verschlussklammern (110) nach Anspruch 9.

11. Rolle nach Anspruch 10,
**dadurch gekennzeichnet, dass** die Rolle mit wenigstens einer maschinenlesbaren Kennung versehen ist.

## Claims

1. Closure clip for bag-shaped or sausage-shaped products, the packaging sleeve material of which is formed from at least one packaging film, the closure clip (110) having a clip base (116) with a part-circular arc-shaped rounding and two straight clip legs (112, 114) which adjoin the clip base (116) in the same direction and diverge away from one another from the clip base (116) and whose central longitudinal axes and the central longitudinal axis (ML) of the clip base (116) lie in a common plane, wherein an axis of symmetry (S) of the closure clip (110) extends through the apex (116a) of the part-circular arc-shaped rounding of the clip base (116) and the central axes (ML) of the two clip legs (112, 114) as well as the axis of symmetry (S) and the part-circular area defined by the clip base (116) lie in a common plane, and wherein connecting extensions (118, 120) pointing away from the axis of symmetry (S) of the closure clip (110) are provided at the free ends of the clip legs (112, 114), at which connecting extensions (118, 120) a plurality of closure clips (110) can be connected to one another in a chain-like manner,
**characterized in that** two longitudinally extending parallel profile recesses (122) are provided on the mutually facing surfaces (112e, 114e, 116b) of the clip base (116) and of the two clip legs (112, 114), which profile recesses extend over the entire mutually facing surfaces (112e, 114e, 116b) of the clip base (116) and of the two clip legs (112, 114) and extend on both sides along the central longitudinal axis (ML) of the mutually facing surfaces (112e, 114e, 116b) of the clip base (116) and of the two clip legs (112, 114), and which are each formed by a V-shaped notch.

2. Closure clip according to claim 1,
**characterized in that** the transition between the clip base (116) and the two clip legs (112, 114) is formed uniformly.

3. Closure clip according to one of claims 1 or 2,
**characterized by** a material thickness which is at least approximately constant over its entire length.

4. Closure clip according to one of claims 1 to 3,
**characterized in that** it is made of a wire.

5. Closure clip according to claim 1,
**characterized in that** the connecting extensions (118, 120) are angled outwardly at an angle of at least approximately 90° with respect to the axis of symmetry (S).

6. Closure clip according to claim 1,
**characterized in that** the connecting extensions (118, 120) have surfaces (118a, 120a) pointing away from the part-circular arc-shaped rounding of the clip base (116), which surfaces are arranged in two intersecting planes enclosing an acute angle with the axis of symmetry (S).

7. Closure clip according to claim 1,
**characterized in that** surfaces (118a, 120a) of the connecting extensions (118, 120) pointing away from the apex (116a) of the part-circle-formed rounding of the clip base (116) lie at least partially in the same plane which preferably perpendicularly intersects the axis of symmetry (S) of the closure clip (110).

8. Closure clip according to claim 1,
**characterized in that** constrictions are provided in the region of end faces of the connecting extensions pointing away from each other, which constrictions taper in the direction of the end faces of the connecting extensions.

9. Clip strand of closure clips (110) according to any one of claims 1 to 8, wherein the closure clips (110) are connected to one another in a chain-like manner via their connecting extensions (118, 120), which are provided at the free ends of the clip legs (112, 114).

10. Reel with a strand of a plurality of closure clips (110) according to claim 9, which is wound on the reel.

11. Reel according to claim 10,
**characterized in that** the reel is provided with at least one machine-readable identifier.

## Revendications

1. Pince de fermeture pour produits en forme de sac ou de saucisse, dont le matériau de l'enveloppe d'emballage est formé d'au moins un film d'emballage, la pince de fermeture (110) présentant un fond de pince (116) avec une courbure en forme d'arc de cercle partiel et deux branches de pinces (112, 114) droites subséquentes dans la même direction sur le fond de pince (116) et divergentes s'écartant l'une de l'autre en s'éloignant du fond de pince (116), dont les axes longitudinaux centraux et l'axe longitudinal central (ML) du fond de pince (116) se situent dans un plan commun, un axe de symétrie (S) de la pince de fermeture (110) passant à travers le sommet (116a) de la courbure en forme d'arc de cercle partiel du fond de pince (116) et les axes centraux (ML) des deux branches de pinces (112, 114) ainsi que l'axe de symétrie (S) et la surface d'arc de cercle partiel définie par le fond de pince (116) se situent dans un plan commun, et des prolongements de liaison (118, 120) pointant à l'opposé de l'axe de symétrie (S) de la pince de fermeture (110) étant prévus aux extrémités libres des branches de pinces (112, 114), prolongements auxquels plusieurs pinces de fermeture (110) peuvent être reliées ensemble à la manière d'une chaîne,
**caractérisée en ce que** deux évidements profilés (122) parallèles s'étendant longitudinalement sont prévus sur les surfaces orientées les unes vers les autres (112e, 114e, 116b) du fond de pince (116) et des deux branches de pinces (112, 114), évidements qui s'étendent sur l'ensemble des surfaces orientées les unes vers les autres (112e, 114e, 116b) du fond de pince (116) et des deux branches de pinces (112, 114) et passent des deux côtés le long de l'axe longitudinal central (ML) des surfaces orientées les unes vers les autres (112e, 114e, 116b) du fond de pince (116) et des deux branches de pinces (112, 114), et qui sont formés comme une encoche en V.

2. Pince de fermeture selon la revendication 1,
**caractérisée en ce que** la jonction entre le fond de pince (116) et les deux branches de pinces (112, 114) est uniforme.

3. Pince de fermeture selon la revendication 1 ou 2,
**caractérisée par** une épaisseur de matériau au moins presque constante essentiellement sur toute sa longueur.

4. Pince de fermeture selon la revendication 1 ou 3,
**caractérisée en ce qu'**elle est fabriquée à partir d'un fil.

5. Pince de fermeture selon la revendication 1,
**caractérisée en ce que** les prolongements de liaison (118, 120) sont coudés vers l'extérieur dans un angle au moins approximativement de 90° par rapport à l'axe de symétrie (S).

6. Pince de fermeture selon la revendication 1,
**caractérisée en ce que** les prolongements de liaison (118, 120) de la courbure en forme d'arc de cercle partiel du fond de pince (116) présentent des surfaces en opposition (118a, 120a) qui sont disposées dans deux plans intersectés et faisant un angle aigu avec l'axe de symétrie (S).

7. Pince de fermeture selon la revendication 1,
**caractérisée en ce que**, du sommet (116a) de la courbure en forme d'arc de cercle partiel du fond de pince (116), des surfaces en opposition (118a, 120a) des prolongements de liaison (118, 120) se trouvent au moins partiellement dans le même plan coupant perpendiculairement de préférence l'axe de symétrie (S) de la pince de fermeture (110).

8. Pince de fermeture selon la revendication 1,
**caractérisée en ce que** des étranglements sont prévus dans la zone d'extrémités côté frontal pointant à l'opposé des prolongements de liaison, étranglements qui se rétrécissent dans le sens des extrémités côté frontal des prolongements de liaison.

9. Cordon de pince de pinces de fermeture (110) selon l'une des revendications 1 à 8, dans lequel les pinces de fermeture (110) sont reliées entre elles à la manière d'une chaîne par leurs prolongements de liaison (118, 120) qui sont prévus aux extrémités libres de branches de pinces (112, 114).

10. Rouleau avec cordon enroulé sur le rouleau de plusieurs pinces de fermeture (110) selon la revendication 9.

11. Rouleau selon la revendication 10,
**caractérisé en ce que** le rouleau est prévu avec au moins un identifiant lisible par machine.
